# EUROPEAN PATENT APPLICATION

(11) **EP 1 980 933 A1**
(43) Date of publication of application: **15.10.2008**
(21) Application number: 07106172.5
(22) Date of filing: 13.04.2007
(51) Int. Cl.: G06F 3/023

(54) **Method of providing language objects by identifying an occupation of a user of a handheld electronic device and a handheld electronic device incorporating the same**

(71) Applicant: 2012244 Ontario Inc., Waterloo, Ontario N2L 3W8 (CA)
(72) Inventor: Fux, Vadim, Waterloo Ontario N2K 3P5 (CA)
(74) Representative: Roberts, Gwilym Vaughan

(57) **Abstract**

The disclosed and claimed concept relates generally to handheld electronic devices and, more particularly, to a method of providing language objects by identifying an occupation of a user of a handheld electronic device and a handheld electronic device incorporating the same. A method and apparatus of providing language objects by identifying an occupation of a user of a handheld electronic device includes the following steps: identifying the occupation of the user of the handheld electronic device from a number of occupations; detecting a text input; and displaying at least a portion of at least a first language object that is associated with the identified occupation and that corresponds to the text input.

## Description

### BACKGROUND

### Technical Field

The disclosed and claimed concept relates generally to handheld electronic devices and, more particularly, to a method of providing language objects by identifying an occupation of a user of a handheld electronic device and a handheld electronic device incorporating the same.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all twenty-six letters of the Latin alphabet, for instance, as well as appropriate punctuation and other symbols.

One way of providing numerous letters in a small space has been to provide a "reduced keypad" in which multiple letters, symbols, and/or digits, and the like, are assigned to any given key. For example, a touch-tone telephone includes a reduced keypad by providing twelve keys, of which ten have digits thereon, and of these ten keys eight have Latin letters assigned thereto. For instance, one of the keys includes the digit "2" as well as the letters "A", "B", and "C". Other known reduced keypads have included other arrangements of keys, letters, symbols, digits, and the like.

In order to enable a user to make use of the multiple letters, digits, and the like on any given key, numerous keystroke interpretation systems have been provided. For instance, a "multi-tap" system allows a user to substantially unambiguously specify a particular character on a key by pressing the same key a number of times equivalent to the position of the desired character on the key. For example, on the aforementioned telephone key that includes the letters "ABC", and the user desires to specify the letter "C", the user will press the key three times. While such multi-tap systems have been generally effective for their intended purposes, they nevertheless can require a relatively large number of key inputs compared with the number of characters that ultimately are output.

Another exemplary keystroke interpretation system would include key chording, of which various types exist. For instance, a particular character can be entered by pressing two keys in succession or by pressing and holding first key while pressing a second key. Still another exemplary keystroke interpretation system would be a "press-and-hold / press-and-release" interpretation function in which a given key provides a first result if the key is pressed and immediately released, and provides a second result if the key is pressed and held for a short period of time. While such systems have likewise been generally effective for their intended purposes, such systems also have their own unique drawbacks.

Another keystroke interpretation system that has been employed is a software-based text disambiguation function. In such a system, a user typically presses keys to which one or more characters have been assigned, actuating each key one time for each desired letter, and the disambiguation software attempts to predict the intended input. Numerous such systems have been proposed, and while many have been generally effective for their intended purposes, shortcomings still exist.

One such shortcoming arises when the handheld electronic device is being used by a user with a certain occupation that employs the use of occupation-specific language objects. When a number of keys of a keypad are depressed, there are occasions when the disambiguation software does not predict occupation-specific language objects.

It would be desirable, therefore, to provide a method of providing language objects by identifying an occupation of a user of a handheld electronic device and a handheld electronic device incorporating the same in which the handheld electronic device has the capability of displaying to the user occupation-specific language objects corresponding to text that was inputted by the user.

### BRIEF DESCRIPTION OF THE DRAWINGS

A full understanding can be gained from the following description when read in conjunction with the accompanying drawings in which:

FIG. 1 is a top plan view of a handheld electronic device showing a language object list in accordance with the disclosed and claimed concepts;

FIG. 2 is a schematic depiction of the improved handheld electronic device of FIG. 1;

FIG. 3 is a flowchart depicting an embodiment of a method in accordance with the disclosed and claimed concept; and

FIG. 4 is a top plan view of an alternative handheld electronic device in accordance with the disclosed and claimed concept.

### DESCRIPTION

When referring to the term "language objects" and variations thereof, such designations shall refer broadly to an object that can be comprised of a number of linguistic elements or which can be constructed, identified, or otherwise obtained from a number of linguistic elements, and thus would include, but not be limited to, words, prefixes, suffixes, variants, symbols, ideograms, phonemes, morphemes, and the like.

When referring to the term "number" and variations thereof, such designation is meant to cover use of any numbers or digits including, but not limited, to the natural numbers as well as non-negative numbers.

When referring to the term "reduced" and variations thereof in the context of a keypad, or other arrangement of input members, such designations shall refer broadly to an arrangement in which at least one of the input members has assigned thereto a plurality of linguistic elements such as, for example, characters in the set of Latin letters.

For purposes of the description hereinafter, the terms "upper", "lower", "right", "left", "vertical", "horizontal", "top", "bottom", and derivatives thereof shall relate to the disclosed and claimed concept as it is oriented in the FIGS.

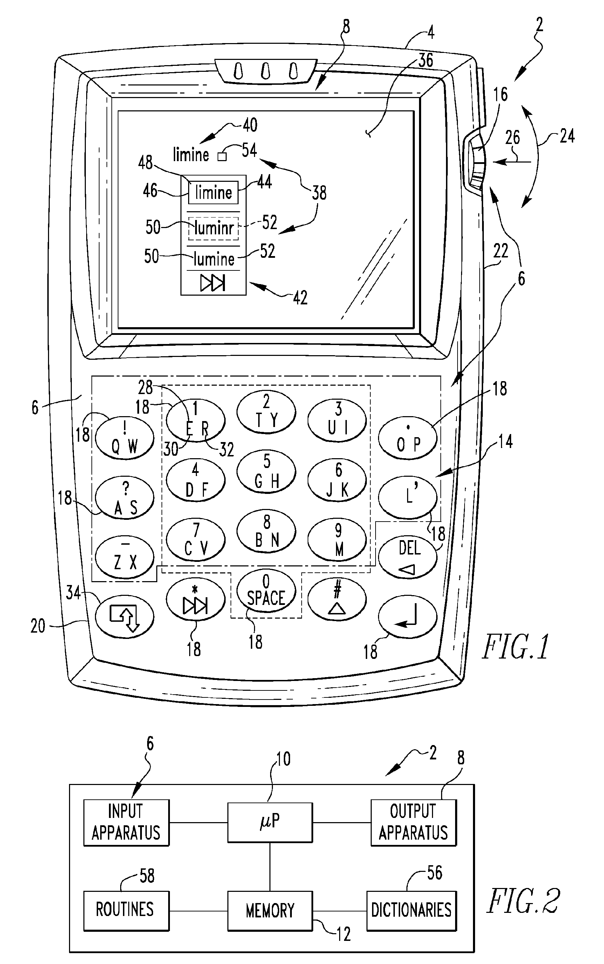

An improved handheld electronic device 2 is indicated generally in FIG. 1 and is depicted schematically in FIG. 2. The exemplary handheld electronic device 2 includes a housing 4 upon which is disposed a processor unit that includes an input apparatus 6, an output apparatus 8, a processor 10, a memory 12, and at least a first routine. The processor 10 may be, for instance, and without limitation, a microprocessor (µP) and is responsive to inputs from the input apparatus 6 and provides output signals to the output apparatus 8. The processor 10 also interfaces with the memory 12. The processor 10 and the memory 12 together form a processor apparatus. Examples of handheld electronic devices are included in U.S. Pat. Nos. 6,452,588 and 6,489,950, which are incorporated by reference herein.

As can be understood from FIG. 1, the input apparatus 6 includes a keypad 14 and a thumbwheel 16. As will be described in greater detail below, the keypad 14 is in the exemplary form of a reduced QWERTY keypad including a plurality of keys 18 that serve as input members. It is noted, however, that the keypad 14 may be of other configurations, such as an AZERTY keypad, a QWERTZ keypad, or other keypad arrangement, whether presently known or unknown, and either reduced or not reduced. A full QWERTY keypad could be used with the disclosed and claimed concepts as well.

The keys 18 are located on a front face 20 of the housing 4, and the thumbwheel 16 is located at a side 22 of the housing 4. In addition to the keys 18, the thumbwheel 16 can serve as another input apparatus since the thumbwheel 16 is capable of being rotated, as indicated by arrow 24, and depressed generally toward the housing 4, as indicated by arrow 26. Rotation of the thumbwheel 16 provides navigational or selection inputs to the processor 10, while depression of the thumbwheel 16 provides another selection input to the processor 10.

As can further be seen in FIG. 1, many of the keys 18 include a one or more linguistic elements 28 disposed thereon. In the exemplary depiction of the keypad 14, many of the keys 18 include two linguistic elements 28, such as including a first linguistic element 30 and a second linguistic element 32 assigned thereto. Accordingly, when a key 18 having a first and a second linguistic element 30, 32 is depressed or actuated the input to the processor 10 from that particular key 18 can either be the first or second linguistic element 30, 32.

To illustrate, one of the keys 18 of the keypad 14 includes as the linguistic elements 28 thereof the letters "E" and "R". If the key 18 on which the "E" and "R" are disposed is actuated, then the output of the key 18 can either be the letter "E" or the letter "R".

Furthermore, numerals or punctuations may also be assigned to one or more keys 18 on the keypad 14. For example, the key 18 on which the letters "E" and "R" are disposed also includes the numeral "1". In the particular embodiment of the keypad 18 that is depicted in FIG. 1, all of the numerals are entered into the handheld electronic device 2 by actuating the <SHIFT> key 34 immediately prior to actuating the key 18 on which the desired numeral is disposed. It should also be noted, however, that in other embodiments of the keypad 18 and/or when particular applications are being executed the actuation of the <SHIFT> key 34 prior to depressing the numeral key might not be necessary.

The output apparatus 8 includes a display 36 upon which can be provided an output 38. An exemplary output 38 is depicted on the display 36 in FIG. 1. The output 38 includes a text input 40 and a language object list 42. As can be seen from FIG. 1, the language object list 42 extends substantially vertically across the display 36. This, however, is not meant to be limiting since the language object list 42 can also extend across the display 36 substantially horizontally or be arranged in any other fashion. Preferably, the language object list 42 is located generally in the vicinity of the text input 40.

The language object list 42 includes possible language object selections determined, at least in part, by analyzing the input from actuation of a key 18. The language object list 42 also includes possible language object selections determined by analyzing the input from actuation of the key 18 by comparing the text input 40 to at least some occupation-specific language objects that are each associated with one of a number of occupations.

The language object list 42 may include a number of language objects displayed in an order of frequently used language objects to seldomly used language objects. In other words, the language object list 42 may display a number of language objects in order of decreasing frequency of use of the language objects. Alternatively, the language object list 42 may display language objects based on linguistic patterns by analyzing the preceding language object inputs.

Also, as can be seen from FIG. 1, the language object list 42 may display, for example, a number of language objects in an order of frequently used occupation-specific language objects to seldomly used occupation-specific language objects. The handheld electronic device 2 is structured to identify the occupation of the user from a number of occupations. In one instance, the user can identify himself as an attorney, for example, by actuating the input apparatus 6 in which the actuation is a selection input detected by the handheld electronic device 2 and such identification is stored in the memory 12 of the handheld electronic device 2. Alternatively, the handheld electronic device 2 can identify the user as an attorney, for example, by comparing a user's text input 40 to some language objects that are each associated with one of a number of occupations. Such identification is stored in the memory 12 of the handheld electronic device 2.

The language object list 42 includes a selection box 44 that appears in a default position 46 in FIG. 1. Initially, the default position 46 of the selection box 44 surrounds and/or highlights a preferred output or frequently used output 48 while the remainder of the first language object list 42 displays various alternative outputs 50. The preferred output 48 is proposed by the processor 10 executing a routine as being the most likely interpretation of the ambiguous input provided by the user by actuating the key 18. The selection box 44 is capable of being moved (i.e. shifted) from the default position 46 to a number of other positions 52 by rotating the thumbwheel 16. By moving the selection box 46 to surround and/or highlight the various alternative outputs 50, the user is able to select any one of the various alternative outputs 50 for possible output on the output apparatus 8. The display 36 also includes a cursor 54 that depicts generally where the next output will be displayed.

To illustrate, actuation of the following keys 18, in sequence: (i) the key 18 on which the letter "L" is disposed; (ii) the key 18 on which the letters "U" and "I" are disposed; (iii) the key 18 on which the letter "M" is disposed; (iv) the key 18 on which the letters "U" and I" are disposed; (v) the key 18 on which the letters "B" and "N" are disposed; and (vi) the key 18 on which the letters "E" and "R" are disposed displays an occupation specific output of "limine" on the display 36. The handheld electronic device 2 will detect the actuation of the keys 18 and the processor 10 will display on the output apparatus 8 the language object list 42. In this particular example, the handheld electronic device 2 will display within the language object list 42 the language objects "limine", "luminr" and "lumine" that are associated with these keys 18.

The language object list 42 will display possible language object selections by comparing the text input 40 to the handheld electronic device 2 to some of the language objects that are each associated with one of a number of occupations. The comparing includes analyzing the text input 40 with occupation-specific language objects obtained from a number of occupation-specific dictionaries 56. The occupation-specific dictionaries 56 typically contain language objects such as words and/or portions of words with information about each language object such as the frequency of occurrence of each language object with respect to other language objects of the occupation-specific dictionaries 56. Additionally, the occupation-specific dictionaries 56 may include language objects in a plurality of languages and may generate or provide language objects based on linguistic patterns.

Also, the language object list 42 may display the language objects in an order of frequently used language objects to seldomly used language objects. In other words, the language object list 42 may display a number of language objects, i.e., letters, in order of decreasing frequency of use of the language objects. Alternatively, the language object list 42 may display language objects based on linguistic patterns by analyzing the preceding language object inputs.

Assuming that the handheld electronic device 2 prefers the language object "limine" as the preferred output 48, the selection box 44 will initially surround or highlight the language object "limine" while the language objects "luminr" and "lumine", the alternative outputs 50, will be displayed outside of the selection box 44. The language object "limine", which is the preferred output 48, is automatically output at the original position of the cursor 54. The user can then continue to input additional language objects into the handheld electronic device 2 by actuating the input members on the handheld electronic device 2 which would generate additional language object lists.

Alternatively, if the user would like to select one of the other language objects "luminr" or "lumine" as opposed to the preferred language object "limine", then the user would move the selection box 44 to surround or highlight one of the other language objects, such as, "luminr" by rotating the thumbwheel 16. Once the language object "luminr" has been surrounded or highlighted by the selection box 44, the highlighted language object "luminr" may be selected by the user by actuating another key 18 on the keypad 14, depressing the thumbwheel 16, actuating the space bar, actuating the enter key or continuing to type. The language object "luminr" is then displayed on the output apparatus 8 in place of the language object "limine". The user can then continue to input additional language objects into the handheld electronic device 2 by actuating the input members on the handheld electronic device 2 which would generate additional language object lists.

Based on the inputs made to the handheld electronic device 2 and due to the identification of the user as an attorney, for example, the language object list 42 could display the language object "limine" as the most frequently used language object. In the occupation of an attorney, a "motion in limine" is commonly known as a request submitted to a court before trial in an attempt to exclude evidence from the proceedings. A "motion in limine" is typically made by a party when the mention of the evidence could prejudice the jury against that party, even if the judge later instructed the jury to disregard the evidence. The language object, "limine" is, for example, an English word or could be, in alternative embodiments, a portion of an English word from the identified occupation. In the presently claimed concepts, the handheld electronic device 2 provides additional language objects like "limine", for example, by identifying an occupation of a user of a handheld electronic device 2. The additional language objects supplement the language objects provided by a number of generic language object lists stored within a number of databases located within the handheld electronic device 2. Such occupation-specific language objects supply additional intended language object selections to the user of the handheld electronic device 2 thereby enhancing the usefulness of the handheld electronic device 2 to the user. The display 36 also displays the language objects "luminr" and "lumine" due to the actuation of keys 18 described above.

Turning to FIG. 2, the memory 12 of the handheld electronic device 2 is depicted schematically. The memory 12 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. As can be seen from FIG. 2, the memory 12 is in electronic communication with the processor 10. The memory 12 additionally includes a number of routines 58 for the processing of data. The routines 58 can be in any of a variety of forms such as, without limitation, software, firmware, and the like. As will be explained in greater detail below, the routines 58 include a routine that can be executed to perform a method in accordance with the disclosed and claimed concept as well as other routines 58 that are utilized by the handheld electronic device 2. Additionally, the memory 12 can also store a variety of databases and information such as, without limitation, occupation-specific dictionaries 56.

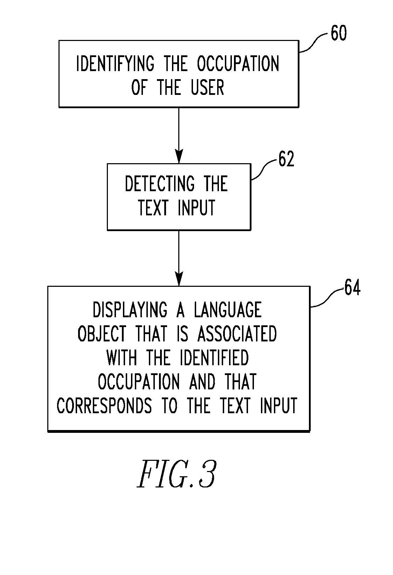

According to an aspect of the present concept, the handheld electronic device 2 includes a routine 58, stored in memory 12 and executable by the processor 10, for providing language objects by identifying an occupation of a user of the handheld electronic device 2. The handheld electronic device 2 has at least one application for analyzing a text input and having available thereto a plurality of language objects with at least some of the language objects each being associated with a particular occupation from a number of occupations. A flowchart depicting one embodiment of the routine 58 is depicted in FIG. 3.

As can be understood from FIG. 3, the routine 58 begins at step 60, where the handheld electronic device 2 identifies the occupation of the user of the handheld electronic device 2 from the number of occupations. Once the occupation of the user of the handheld electronic device 2 has been identified, the routine 58 continues at step 62, by detecting the text input 40. After the handheld electronic device 2 has detected the text input 40, at step 62, the routine continues at step 64, by displaying at least a portion of a least a first language object that is associated with the identified occupation and that corresponds to the text input 40.

Optionally, the identifying step 60 includes receiving a selection input from an input member as to one of the occupations from the number of occupations. For example, the user may manually actuate the input apparatus 6 to identify the occupation of the user. Alternatively and optionally, the identifying step 60 includes comparing the text input 40 to at least some of the language objects that are each associated with one of the number of occupations, and automatically determining from the comparing, the occupation of the user. Optionally, the comparing of the text input 40 includes performing a comparison between the text input 40 and occupation-specific language objects obtained from a plurality of occupation-specific dictionaries 56 available to the handheld electronic device 2.

Optionally, responsive to the identifying step 60, the handheld electronic device 2 may activate occupation-specific language objects that are associated with the identified occupation. At least some of the occupation-specific language objects may be downloaded from a remote location or may be stored within one of a number of databases located within the handheld electronic device 2.

Optionally, the handheld electronic device 2 may identify a plurality of languages of the user. Optionally, responsive to identifying the occupation and languages of the user of the handheld electronic device, the handheld electronic device 2 activates a plurality of occupation-specific language objects that are associated with the identified occupation and languages of the user. The occupation-specific language objects associated with the identified languages of the user may be assigned a higher priority than occupation-specific language objects that are not associated with the identified languages of the user.

Optionally, the identifying step 60 includes making a determination that the user has entered a number of occupation-specific language objects that exceed a pre-determined threshold. Optionally, at least a portion of such a determination may include analyzing the number of times a particular occupation-specific language object is input over a pre-determined period of time or among a pre-determined total number of language object text inputs. For example, if the user inputs ten occupation-specific language objects associated with an attorney occupation over a period of ten minutes, the handheld electronic device 2 would be able to identify the occupation of the user as an attorney. Alternatively and optionally, at least a portion of such a determination may include analyzing the quantity of occupation-specific language objects that are input. For example, if the user inputs ten occupation-specific language objects in the occupation of an attorney and only inputs two occupation-specific language objects in the occupation of a medical doctor, the handheld electronic device 2 would be able to identify the occupation of the user as an attorney and not a doctor.

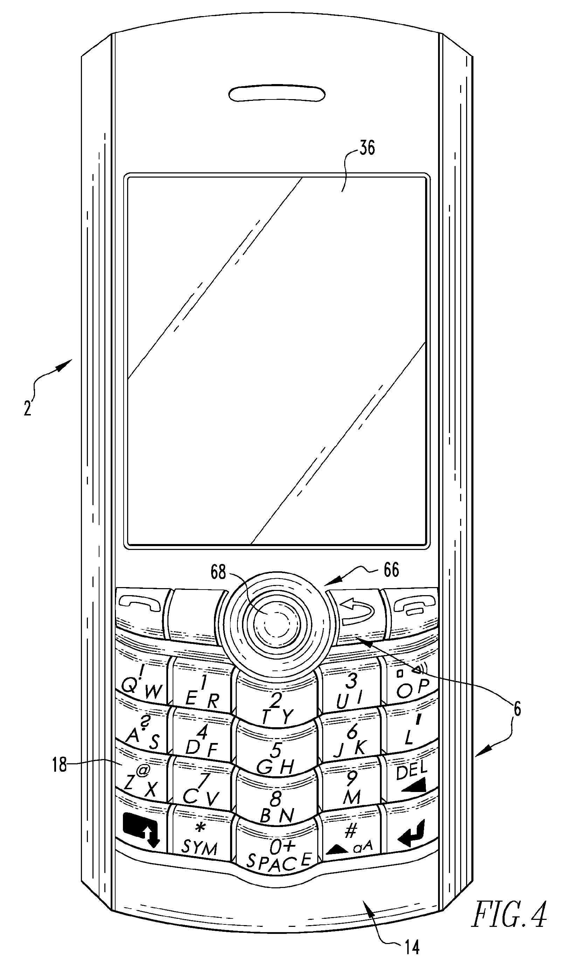

Turning to FIG. 4, an alternate handheld electronic device 2 is displayed, which is but another example of a type of a handheld electronic device to which aspects of the disclosed and claimed concepts can be applied. Elements that are presented in FIG. 4 which are similar to the elements found in FIG. 1 are labeled with the same element number in FIG. 4. The exemplary handheld electronic device 2 includes an input apparatus 6 in the form of a keypad 14 and a navigational tool 66 is used to control the functions of the handheld electronic device 2 and to generate text and other inputs. The keypad 14 constitutes a reduced QWERTY keypad in which most of the keys 18 are used to input two letters of the alphabet. It is noted, however, that the keypad 14 may be of other configurations, such as an AZERTY keypad, a QWERTZ keypad, or other keypad arrangement, whether presently known or unknown, and either reduced or not reduced. Thus, initially the input generated by depressing one of these keys is ambiguous in that it is undetermined as to which letter was intended. Various schemes have been devised for disambiguating the inputs generated by these keys 18 assigned multiple letters for input. Continuing with FIG. 4, the handheld electronic device 2 also includes the navigational tool 66. In this particular embodiment, the navigational tool 66 is a trackball 68 that can be rotated thereby allowing for the navigation of a cursor which is displayed on a display 36 in various directions including up, down, left, right, and any combination thereof. Moreover, the trackball 68 can also be depressed. When the trackball 68 is depressed, a selection is made based upon the current location of the cursor. For example, if the cursor is located over a given program icon, that program will be launched when the trackball 68 is depressed. The input provided through the keypad 14 and trackball 68 is displayed on the display 36.

It should be noted, however, that despite FIG. 4 depicting the navigational tool 66 as being disposed on the front face of the handheld electronic device 2, the navigational tool 66 can also be disposed on a side of the handheld electronic device 2 in the form of the thumbwheel 16 as shown in FIG. 1. The thumbwheel 16 of FIG. 1, which is capable of being rotated and depressed, may be disposed on the side of the handheld electronic device 2 of FIG. 1 in lieu of the trackball 68. Rotation of the thumbwheel 16 can provide a navigation input, while depression of the thumbwheel 16 can provide a selection input. Accordingly, rotation of the thumbwheel 16 can navigate the cursor over a particular program icon, while depression of the thumbwheel 16 with the cursor located over a given program icon can launch the program.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of providing language objects by identifying an occupation of a user of a handheld electronic device having at least one application for analyzing a text input and having available thereto a plurality of language objects with at least some of the language objects each being associated with a particular occupation from a number of occupations, the method comprising:
identifying the occupation of the user of the handheld electronic device from the number of occupations;
detecting the text input; and
displaying at least a portion of at least a first language object that is associated with the identified occupation and that corresponds to the text input.

2. The method of claim 1, wherein the identifying includes receiving a selection input from an input member as to one of the occupations from the number of occupations.

3. The method of claim 1, wherein the identifying includes:
comparing the text input to at least some of the language objects that are each associated with one of the number of occupations; and
determining from the comparing the occupation of the user.

4. The method of claim 3, wherein the comparing includes performing a comparison between the text input and occupation-specific language objects obtained from a plurality of occupation-specific dictionaries available to the handheld electronic device.

5. The method of claim 1, wherein responsive to identifying the occupation of the user of the handheld electronic device, further comprising activating on the handheld electronic device occupation-specific language objects that are associated with the identified occupation.

6. The method of claim 5, wherein the occupation-specific language objects are stored within one of a number of databases located within the handheld electronic device.

7. The method of claim 5, further comprising downloading at least some of the occupation-specific language objects.

8. The method of claim 1, wherein the identifying includes making a determination that the user has entered a number of occupation-specific language objects that exceed a pre-determined threshold.

9. The method of claim 8, further comprising making at least a portion of the determination by analyzing the number of times a particular occupation-specific language object is input over a pre-determined period of time.

10. The method of claim 8, further comprising making at least a portion of the determination by analyzing the quantity of occupation-specific language objects that are input.

11. The method of claim 1 further comprising:
identifying a plurality of languages of the user,
wherein responsive to identifying the occupation and languages of the user of the handheld electronic device, further comprising:
activating on the handheld electronic device a plurality of occupation-specific language objects that are associated with the identified occupation and languages of the user.

12. The method of claim 11 wherein the occupation-specific language objects associated with the identified languages of the user are assigned a higher priority than occupation-specific language objects that are not associated with the identified languages of the user.

13. A handheld electronic device structured to provide language objects by identifying an occupation of a user of a handheld electronic device comprising a processor apparatus having a processor and a memory with the memory having stored therein at least one application for analyzing a text input and having available thereto a plurality of language objects with at least some of the language objects each being associated with a particular occupation from a number of occupations, the memory having stored therein a number of routines which, when executed by the processor, cause the handheld electronic device to perform operations comprising:
identifying the occupation of the user of the handheld electronic device from the number of occupations;
detecting the text input; and
displaying at least a portion of at least a first language object that is associated with the identified occupation and that corresponds to the text input.

14. The handheld electronic device of claim 13, wherein the identifying includes receiving a selection input from an input member as to one of the occupations from the number of occupations.

15. The handheld electronic device of claim 13, wherein the identifying includes:
comparing the text input to at least some of the language objects that are each associated with one of the number of occupations; and
determining from the comparing the occupation of the user.

16. The handheld electronic device of claim 15, wherein the comparing includes performing a comparison between the text input and occupation-specific language objects obtained from a plurality of occupation-specific dictionaries available to the handheld electronic device.

17. The handheld electronic device of claim 13, wherein responsive to identifying the occupation of the user of the handheld electronic device, further comprising activating on the handheld electronic device occupation-specific language objects that are associated with the identified occupation.

18. The handheld electronic device of claim 17, wherein the occupation-specific language objects are stored within one of a number of databases located within the handheld electronic device.

19. The handheld electronic device of claim 17, further comprising downloading at least some of the occupation-specific language objects.

20. The handheld electronic device of claim 13, wherein the identifying includes making a determination that the user has entered a number of occupation-specific language objects that exceed a pre-determined threshold.

21. The handheld electronic device of claim 20, further comprising making at least a portion of the determination by analyzing the number of times a particular occupation-specific language object is input over a pre-determined period of time.

22. The handheld electronic device of claim 20, further comprising making at least a portion of the determination by analyzing the quantity of occupation-specific language objects that are input.

23. The handheld electronic device of claim 13 further comprising:
identifying a plurality of languages of the user,
wherein responsive to identifying the occupation and languages of the user of the handheld electronic device, further comprising:
activating on the handheld electronic device a plurality of occupation-specific language objects that are associated with the identified occupation and languages of the user.

24. The handheld electronic device of claim 23 wherein the occupation-specific language objects associated with the identified languages of the user are assigned a higher priority than occupation-specific language objects that are not associated with the identified languages of the user.
